(19)

Europäisches
Patentamt
European
Patent Office
Office européen
des brevets

(11)  **EP 3 046 298 A1**

(12)  **EUROPEAN PATENT APPLICATION**

(43) Date of publication:
**20.07.2016 Bulletin 2016/29**

(51) Int Cl.:
***H04L 12/875*** (2013.01)

(21) Application number: **15305029.9**

(22) Date of filing: **15.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Tang, Siyu**
**2018 Antwerpen (BE)**

• **Lou, Zhe**
**2018 Antwerpen (BE)**

(74) Representative: **Philippaerts, Yannick et al**
**Arnold & Siedsma**
**Bezuidenhoutseweg 57**
**2594 AC The Hague (NL)**

Remarks:
This application was filed on 19-08-2015 as a divisional application to the application mentioned under INID code 62.

(54)  **Earliest deadline first scheduling system**

(57)    Method for prioritizing data flows in a network comprising an earliest deadline first (EDF) scheduling system, comprising the steps of requesting data flows at respective first moments of time; assigning to each one of the data flows a respective deadline relating to a respective second moment of time of consumption of the data flow; assigning a respective parameter to each one of the data flows indicative for a time difference between the respective first moment of time and the respective second moment of time; when network congestions occurs, prioritizing said data flows by dropping at least portions of the data flows based on their respective parameters.

FIG. 1

EP 3 046 298 A1

**Description**

Technical Field

The present invention relates to a method for prioritizing data flows in a network comprising an earliest deadline first scheduling system. The invention further relates to a network element comprising earliest deadline first scheduling system.

Background

Most of today's traffic delivery schemes/devices are deadline-agnostic, while the streaming character of emerging web or OTT (over the top) applications is often combined with an interactive character indicates where timely delivery is key. Over-dimensioning for these emerging applications may guarantee timely delivery of the deadline-aware traffic, but incurs high costs. Deadline-aware scheme known in the prior art (e.g., DCTCP[2], DCTCP[3] and SCAP) will prioritize bits that have the most urgent deadline at the expense of the delivery of less urgent bits. A prominent feature of such schemes is to allow users to request content to be consumed in the future, say at time $t_n$. The delivery of the future content can be already completed, once the request is received at the video server, say at time $t_0$, when there is bandwidth available. Such a feature therefore allows to significantly optimize resource utilization so as to arrive at smooth bandwidth usage.

Earliest deadline first scheduling system (EDF) is the optimal scheduling mechanism in scheduling deadline-aware traffic, however, it leads to improper user-behavior in requesting content with more urgent deadlines (i.e., "I want it right now"), hence, compromises the performance of users who want to consume the bandwidth in a wise way (i.e., future content reservation).

Deadline-aware datacenters are known and deadline-awareness was incorporated on the existing Datacenter TCP (DCTCP).

In D[3] TCP, described in C. Wilson, H. Ballani, T. Karagiannis, A. Rowstron. Better Never Than Late: Meeting Deadlines in Datacenter Networks. In Proc. SIGCOMM, 2011., incorporated by reference for the purpose of explaining deadline-awareness in datacenters, the switches grant a sender's request for the required bandwidth based on the flow size and deadline. It incorporates the idea of deadline awareness into the network by proactively allocating bandwidth based on bandwidth reservation before start of the data transmission. The drawback of D[3] TCP is that the switches allocate bandwidth on a first-come-first-serve basis. This means that the scheme may allocate bandwidth to flows with far-deadline but arrive at the switch ahead of flows with emergent deadlines. Hence, this scheme often inverts the priority of flow requests, and contributes to missed deadlines.

The D[2] TCP algorithm, described in B. Vamanan, J. Hasan and T. N. Vijaykumar. Deadline-aware datacenter TCP (D2 TCP). ACM SIGCOMM Computer Communication Review, 42 (4): 115-126. 2012., incorporated by reference for the purpose of explaining deadline-awareness in datacenters, utilizes a distributed and reactive approach to modulate the TCP window size based on the emergency of deadlines. The congestion window of far-deadline flows back off aggressively while the near-deadline flows back off only a little or not at all. It was shown that it reduces the fraction of missed deadline by 50% compared to D[3] TCP.

Unfortunately, both D[2] and D[3] TCP try to reduce missing deadlines without a hard guarantee on deadline violation. None of them have a quantitative measures of whether the available bandwidth is sufficient to deliver all traffic within their deadlines. If not, what is the fraction of the deadlines are going to be violated. Flows are treated equally regardless of the durations they are in the system.

It is an object of the present invention to further improve the EDF scheduling mechanism.

Summary

To this end, the invention provides a method for prioritizing data flows in a netwowrk comprising an EDF scheduling system, comprising the steps of:

- requesting data flows at respective first moments of time;
- assigning to each one of the data flows a respective deadline relating to a respective second moment of time of consumption of the data flow;
- assigning a respective parameter to each one of the data flows indicative for a time difference between the respective first moment of time and the respective second moment of time;
- when network congestion occurs, prioritizing the data flows based on their respective parameters.

In a conventional EDF scheduling system, compared to flows with impending deadlines, the future content is considered less urgent, as its deadlines are farther from now. As time elapses, the previously non-urgent *"future content"* at time $t_0$, becomes urgent shortly before $t_n$. In case of insufficient network capacity, packet drops can be issued as the congestion signal to the clients that initiated the requests. The decision of dropping packets was previously purely based on the detection of deadline violation using an EDF (Earliest Deadline First) scheduler, which is nowadays considered as the most efficient scheduling method. However it conventionally doesn't take into account the duration that a request is initiated in the system. This means, a request A that is known by the system, say being issued 2 days ago, is conventionally treated equally as a request *B* that enters the system, say 10 minutes ago, in case of network congestion. Ignorance of flow priority under insufficient network capacity will not only cause service frustration, but discourage users from using the feature of *"future content reservation"*.

Because in the invention not only the deadline relating to a moment of time of consumption of the data flow is assigned to the data flow, but also a parameter that is indicative for a time difference between the first moment of time when the data flow is requested and the second moment of time of consumption of the data flow, a network element can determine whether a data flow was requested a long time before the consumption deadline, or was requested shortly before the consumption deadline. Since an EDF scheduling system is adapted to orchestrate multiple data flows to optimize the data throughput, it is advantageous for the scheduler to know about future data flows so that when the data throughput through the network element is not completely full with urgent data flows, then the remaining capacity of the network element can be used to send data packages of future data flows. This has two advantages, a first advantage being that the network element can be used at its maximum capacity, or at least close to its maximum capacity, a second advantage being that the future work load is decreased so that the network element will have more room in the future for urgent data flows. In this manner, the network element can be used at its maximum capacity or at least close to its maximum capacity, and a maximum amount of data flows can be delivered in time. In this manner, congestion is maximally avoided. However, when a congestion situation is detected, data flows are prioritized. Where data flows were conventionally treated based on a 'most urgent deadline first basis', and flows having the same deadline were treated in random order, the invention allows the network element to implement a system that rewards early data reflow requests. By rewarding early data flow requests, users that request their data flows early suffer less quality of service degradation. This creates incentives for users to request their data flows early so that the EDF scheduling system can optimally work.

Preferably, the step of prioritizing comprises assigning a higher priority to data flows for which the respective parameter indicates a larger time difference. When the respective parameter indicates a larger time difference, the data flow resided in the network for a longer time, so that the EDF scheduling system had more throughput optimization possibilities with the data flow. The data flow with the larger time difference is therefore assigned a higher priority when network congestion occurs. In this manner, the user making effort to early request a data flow on the one hand helps the EDF scheduling system to optimize its throughput and on the other hand is rewarded for a higher priority when network congestion occurs.

Preferably, the step of prioritizing is implemented to drop a percentage of bits of the data flow proportional to the respective parameters of the data flows when network congestion occurs. By assigning a percentage of bits of the data flow to drop, and make this percentage of bits proportional to the parameters, fairness is built into the scheduling system. Data flows with equal parameters will suffer equal bit drops so that the quality of service degradation suffered by the user will be equal. A well behaving user, meaning a user who requests its data flows early will suffer less quality of service degradation than a bad behaving user showing a "I want it now" style of requesting data flows.

Preferably, each one of the data flows comprises multiple data packages, wherein each package is assigned a separate parameter indicative for a time difference between the respective first moment of time relating to the data package and the respective second moment of time relating to the data package. A data flow comprises multiple data packages. Thereby, a data flow typically has a consumption start deadline, and a consumption end deadline. The first package in the data flow will be assigned with the consumption start deadline as second moment of time, while the last package in the data flow will be assigned with the consumption end deadline of the data flow. Since the first package and the last package are typically requested at the same first moment of time, and since the parameter is indicative for a time difference between the first moment of time, which is equal for first and last package, and a second moment of time, which is different for first and last package, multiple data packages in a data flow will have different parameters. More particularly, the parameter value will gradually increase over the multiple data packages in a data flow. This mechanism improves the user experience, and allows the EDF scheduler to optimize network throughput.

The invention further relates to a network element comprising an earliest deadline first scheduling system, the network element comprising:

- an extractor for extracting a parameter from a data flow indicative for a time difference between a first moment of time of requesting the data flow and a second moment of time relating to a deadline of consumption of the data flow; and
- a prioritizer for prioritizing, when network congestion occurs, data flows at scheduling system based on their respective parameters.

The network element implements the method for prioritizing data flows in a network comprising an earliest deadline first scheduling system as is described above. Therefore, the network element shows the above described advantages and effects. Preferably, the prioritizer is configured to assign a higher priority to data flows for which the respective parameter indicates a larger time difference.

Preferably, the prioritizer comprises a selective bit dropper adapted to drop a percentage of bits of the data flow proportional to the respective parameter. The selective bit dropper implements in the network element the bit dropping proportional to the parameter. The effects thereof are described above.

The invention further relates to a data package suitable for being transmitted in an earliest deadline first scheduling system, the data package comprising a parameter indicative for a time difference between a first moment of time of requesting the data package and a second moment of time relating to a deadline or consumption of the data package, such that when network congestion occurs, the scheduling system is capable of using the parameter for package prioritization. In the data package, an additional parameter is added which parameter relates to the time difference between the moment of requesting of the data package and the deadline of consumption of the data package. By adding this additional parameter an EDF scheduling system will be able to prioritize data packages in a fair way, thereby rewarding users that request their data packages as early as possible.

The invention further relates to a digital storage medium encoding a machine executable program of instructions to perform the method of the present invention. The invention further relates to a computer program product, comprising computer executable instructions for performing, when the program is run on a computer, the method of the invention.

Brief description of the figures

Some embodiments of apparatus and/or methods in accordance with embodiments of the present invention are now described, by way of example only, and with reference to the accompanying drawings, in which:

figure 1 illustrates a network element with an earliest deadline first scheduling system according to an embodiment of the invention;
figure 2 illustrates flow requests that can be made in an earliest deadline first scheduling system.

Detailed description of embodiments

A conventional deadline-aware flow i, is preferably characterized by a 5-tuple, $(s_i(t), d_b(i;t), d_e(i;t), \gamma_i(t), \Delta(t))$, where $s_i(t)$ denotes the size of the flow, $d_b(i;t)$ and $d_e(i;t)$ refers to the begin and end deadline of flow i, $\gamma_i(t)$ indicates the certainty of request i at time t, and $\Delta(t) \geq 0$ is a deadline margin maintained at each EDF scheduler. The parameter of time t can be dropped from the definition for convenience.

In the present invention an additional parameter $p_i(t)$ is added, which additional parameter is used to determine the priority of flow i. Flows are prioritized as a function of their delivery duration issued in the system, i.e., $p_i(t) \propto f(d_s(i)-t_{issue}(i))$ or $p_i(t) \propto f(d_b(i)-t_{issue}(i))$, where $t_{issue}(i)$ is the time that flow i is requested for delivery, and $f(x)$ is a monotonically increasing function of x. The longer a flow is scheduled for its delivery, the higher priority it has, hence, less affected by packet drops when network congestion occurs. With such a mechanism, a well-behaving client is rewarded for reserving content up-front with guaranteed quality of service (QoS) under insufficient bandwidth. By "well-behaving", it is meant a flow that is scheduled prior to its consumption, and does not cancel the request before the delivery is completed.

Moreover, the priority of flows with the same delivery duration will be determined by their requested rates. Logically the lower the rate is, the higher its priority will be. In order to simplify the explanation of the invention, the rate is considered to be constant and to determine the priority of flows, only the above-described additional parameter will be considered. In practice, other parameters can be used together with the additional parameter to determine the priority of flows.

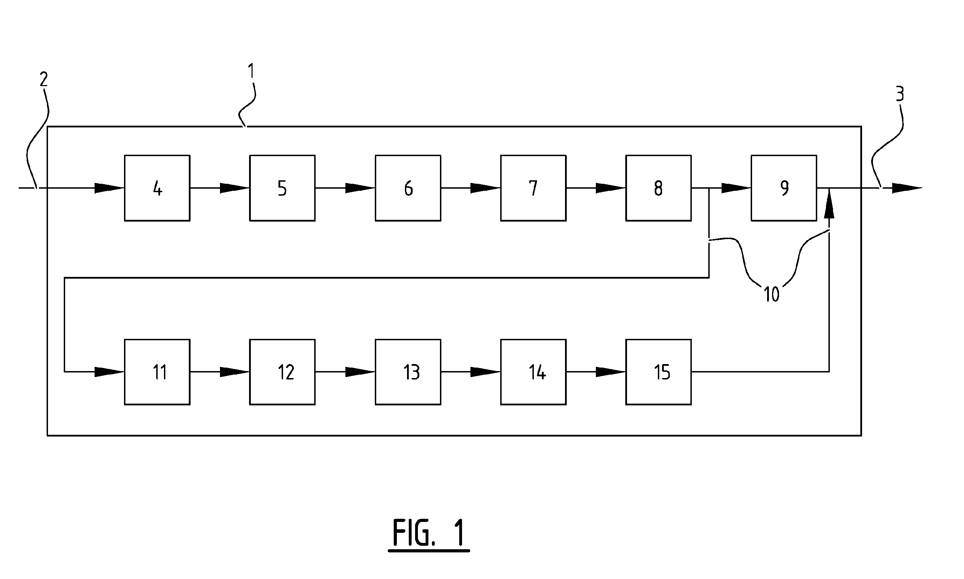

Fig. 1 shows the processing block of an example of an EDF scheduler incorporating the concept of flow prioritization according to an embodiment of the invention. Note that the function of congestion information signalling can be implemented independent from the EDF scheduler. Hence, the present invention is compatible with the known EDF scheduling mechanisms, but not restricted to a specific EDF mechanism.

Fig. 1 shows a network element 1 comprising an EDF scheduler wherein the network element 1 is adapted for receiving incoming traffic 2. The mechanism in the network element 1 aims to optimize a traffic output 3 of the network element 1. The network element 1 comprises multiple blocks which are shown as an example of a network element with an EDF scheduling mechanism. The skilled person will understand that some of these blocks may be omitted or replaced by another block. In the figure, a traffic classification block 4 is shown. Furthermore, a predict future request pattern block 5 is shown. In block 6, an optimal bandwidth calculation with EDF scheduling is performed. In block 7, a most suitable bandwidth selection is made. The outcome of block 7 can be used as input for block 5 for updating the most probable flow sequence at time t'. Block 8 relates to deadline violation detection. If block 8 detects deadline violation, then feedback congestion signals are generated in block 9. If no deadline violation is detected, in block 8, block 9 is not triggered. These blocks 4-9 allow the network element 1 to perform EDF scheduling.

The further blocks 11-15 are added for implementing an embodiment of the present invention. Block 11 performs computation of the time difference between the first moment of time when the data packet or the flow is requested and the second moment of time being the deadline of consumption of the data packet or the data flow. This computation results in an indication of the period of time that the packet or the flow is residing in the network. During this period of time, the packet or data flow can be used to optimize and maximize throughput through the network element 1. Block 12 is an optional block and relates to normalization of the time difference calculated in block 11. The normalization allows the time difference to be expressed in a predetermined format. For example, in a value between 0 and 1. Block 13 relates to flow prioritization. Block 14 relates to identification of the priorities relative to one another when it is determined that not all deadlines can be met. Thus, when congestion is detected, priorities of the flows are used. In block 15, packets or percentages of bits are dropped based on flow priorities.

Once there is insufficient bandwidth to deliver all deadline-aware flows, the scheduler performs the following preferred actions to trigger rate adaptation by congestion signalling for example via packet drops. The rationale behind the scheme is to reward the clients for future content reservation rather than requesting for content with urgent deadlines, hence, to avoid causing bursts of bandwidth usage in the network.

In a first step, upon the detection of deadline violation, the scheduler computes the duration of each existing flow by $\tau_i = d_s(i)-t_{issue}(i)$. As an alternative, the duration of flow i may also be computed as $\tau_i = d_b(i)-t_{issue}(i)$.

In a second optional step, the request duration $\tau(i)$ of each flow is normalized over $\tau_i^* = \frac{\tau_i}{\tau_{max}}$ where $\tau_{max}$ is the current maximum request duration among the N flows known in the system. Such an operation is optional, but recommended, as the output after normalization is in the range of $\tau_i^* \in [0,1]$, hence, is more convenient to use when considering the flow priority function.

In a third step, the scheduler prioritizes flows as a function of their delivery duration issued in the system, according to $p_i \propto f(d_s(i)-t_{issue}(i))$, or $p_i \propto f(\tau_i^*)$, depending on whether duration normalization is performed.

In a fourth step, for those flows whose deadlines are violated, i.e., $\delta_{ij} < 0$, where $\delta_{ij}$ is the difference between the actual and the requested deadline of bit $j$ in flow i, identify all flows with $p_j \leq p_i$, i.e., flows with smaller or equal priority than i.

In a fifth step, instead of dropping packets for those flows whose deadlines cannot be met, the scheduler differentiates flows based on their priorities and drops packets (or bits) in a selective way, e.g., proportionally to $(1 - p_i)$. This ensures that flows with higher priority are less affected by network congestion (better QoS), while flows with lower priority should back-off more to trigger rate adaptation.

According to a first embodiment of the invention, flow priority can be computed using the following non-decreasing function:

$$p_i = \tau_i^\alpha$$

Thereby, the relationship between flow priority and duration is controlled by parameter $\alpha$. A large $\alpha$ (e.g., $\alpha>1$) implies a slowly increasing curve of $p_i$ with increasing $\tau_i$, while a small $\alpha$ (e.g., $\alpha<<1$) indicates a sharp increase for small $\tau_i$ and a gradually flattened curve with larger $\tau_i$. In other words, to provide higher QoS to flows with very large (normalized) duration, a skilled person should opt for large $\alpha$ (e.g., $\alpha=5$ or 10). On the contrary, with small $\alpha$ (e.g., $\alpha=0.1$ or 0.03), flows with very small duration (say $\tau_i < 0.1$) will experience much more packet drops compared to those having larger (normalized) durations.

The selection of parameter $\alpha$ is a design choice, depending on system and QoS requirements. The flow priority computed from (1) is in the range of $p_i \in [0,1]$.

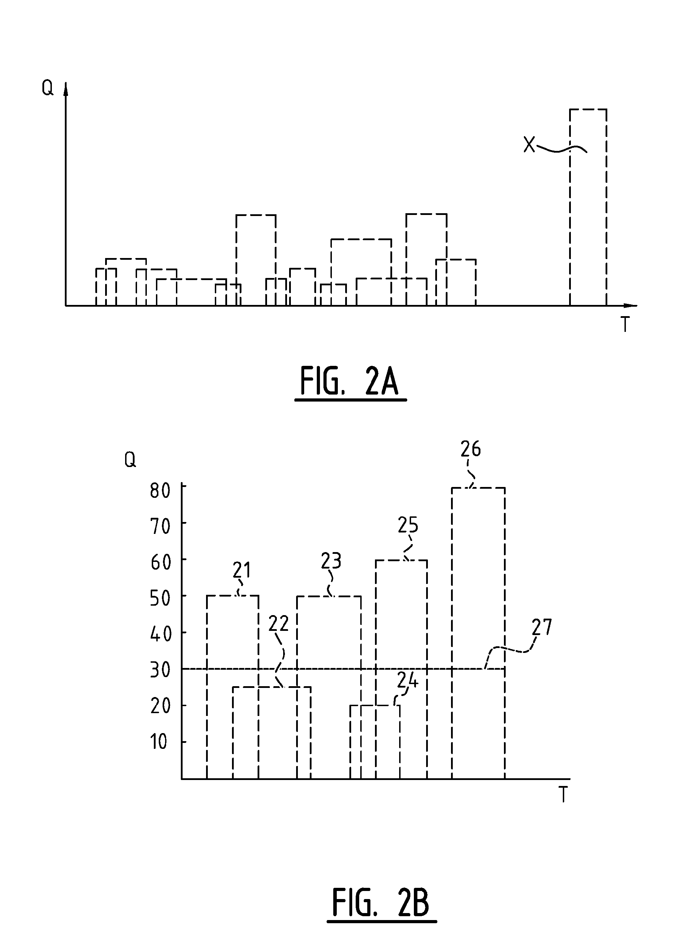

Fig. 2A and 2B illustrate multiple flow requests that can be made in time. On the horizontal axis, the time is plotted while the vertical axis relates to the quantum of the flow request. In practice, the quantum of the flow request can be for example the requested bit rate. Each block illustrated in the figures, relates to a different flow request. Fig. 2A illustrates a snapshot of flow requests at Monday 10:00 am, while fig. 2B illustrates a snapshot of flow requests at Monday 19:50 pm. In fig. 2B flow 7 corresponds to the remaining bits to be delivered of content X, which can also be seen in fig. 2A.

The example below will show the effects of invention in a real life situation. Suppose that a number of requests arrived in the system at Monday 10:00am, as illustrated in Fig. 2A. Amongst other flows, flow X, also referred to as content X, is reserved for viewing at Monday 18:00pm as its begin deadline, and Monday 20:00pm as its end deadline. This content is likely to be a High-Definition movie with a 2-hour duration. Upon receiving these requests, the scheduler computes the bandwidth to be allocated to the N flows and starts to deliver the content being requested. The time that content X is issued in the system is therefore $t_{issue}(X) = Monday$ 10:00am.

Note that Fig. 2A is a system request snapshot captured at Monday 10:00am. Newer requests may arrive and being issued in the network along the time axis.

Although the delivery of content X is scheduled 8 hours prior to its consumption, it is possible via conventional systems that the delivery cannot be completed before its played-out time. This is likely to happen if the system is always busy in serving arriving requests with more urgent deadlines. It is however undesirable for content X to miss its deadlines, since it is queued in the system for 8 hours.

Assume the request arriving pattern at Monday 19:50pm as plotted in Fig. 2B, and assume that there is no new requests that enter the system until Monday 20:00pm. Flow 27 in this snapshot corresponds to the remaining bits that need to be delivered in content X before its end deadline. The time that the seven illustrated flows (21, 22, 23, 24, 25, 26, 27) are known and issued in the system is: 10mins 30mins, 1hr, 2hrs, 4hrs, 6hrs, and 8hrs prior to their viewing time respectively. Applying the flow prioritization function ($\alpha$=2), the priority of each flow is found to be:

Table 1: Flow prioritization with $\alpha$=2.

| Flow index | Priority $p_i$ | Percentage of bits to be dropped $q_i$ |
|---|---|---|
| 21 | 0.000434 | 19,5800% |
| 22 | 0.003906 | 19,5120% |
| 23 | 0.015625 | 19,2824% |
| 24 | 0.062500 | 18,3642% |
| 25 | 0.250000 | 14,6914% |
| 26 | 0.562500 | 08,5700% |
| 27 | 1.000000 | 00,0000% |

Due to insufficient network bandwidth (either physical bandwidth restriction or limited network capacity granted for deadline-aware traffic), the seven flows cannot be delivered before their deadlines. According to conventional techniques without implementation of the invention, part of the content in flow 5, 6 and 7 are delivered after the requested deadlines.

The fact that the delivery of flow 5, 6 and 7 is compromised by flow 1, 2, 3, and 4 (who claim themselves with more urgent deadlines) causes unfairness between flows, as the first 4 flows takes advantage of the EDF scheduling, although flow 5, 6 and 7 are queuing in the system for a longer time.

To eliminate the unfairness during congestion control, the invention proposes to apply selective bit drop according to the priority associated with each flow. The general principle is: packet drop rate is inverse to the priority of a flow, i.e., the higher priority a flow has, the lesser bits shall be dropped by the scheduler.

According to a first preferred embodiment, the bit dropping rate is determined using a simple weighting function of

$$q_i = \frac{1 - p_i}{\sum_{i=1}^{N}(1 - p_i)}.$$

The computed percentage of bits to be dropped (out of the ones to be discarded by the scheduler) is shown in Table 1 above. In this particular example, flows issued within one 2 hour (first four flows) were given more or less the same percentage of packet drops, while the packet drop rate of the last 3 flows were adapted inversely to their priorities. Note that depending on system requirement and design, different thresholds (other than 2 hour as in this embodiment) shall be used for selective packet drop. In this context, it is noted that dropping a percentage of bits of the data flow proportional to the respective parameters of the data flow is just one embodiment of the present invention. There are other ways of dropping packets. For instance, the entire data flow with the lowest priority can be dropped.

The effect of prioritized packet drop in case of network congestion is that flow 7 is granted the highest QoS, hence, remains intact from packet (or bit) drop. The percentage of bits dropped from flow 1 to 4 is much higher than flow 5 and 6, since the latter two flows have higher priority. In this way, scheduling content delivery a significant period of time before consumption of the flow is reward. Additional to the direct positive effect of the invention for the consumer that requests content early, there is also an indirect positive effect in that the EDF scheduler has a larger period of time wherein the scheduler can optimize the data flows in the network so that the network capacity can be used in a more optimal way.

To implement the aforementioned prioritization of flows, it is preferred in an embodiment to provide delivery duration information to network nodes/routers. Take the SCAP protocol as an example, the original SCAP header comprises, amongst others, a deadline begin field, a deadline end field and a content address field. To enable flow prioritization, a 32-bit "request time"-field is introduced into the SCAP request header, which informs the content server when the request is scheduled in the system. Based on the "request time", the time difference between request and consumption is calculated and such information is piggybacked in the new SCAP response header, which enables network nodes/routers to determine the priority of each network flow.

The present invention provides a mechanism for enhancing and motivating end-users to reserve future content in a deadline-aware application, by avoiding unfairness between deadline-aware flows.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for prioritizing data flows in a network comprising an earliest deadline first (EDF) scheduling system, comprising the steps of:

   - requesting data flows at respective first moments of time;
   - assigning to each one of the data flows a respective deadline relating to a respective second moment of time of consumption of the data flow;
   - assigning a respective parameter to each one of the data flows indicative for a time difference between the respective first moment of time and the respective second moment of time;
   - when network congestions occurs, prioritizing said data flows based on their respective parameters.

2. Method according to claim 1, wherein the step of prioritizing comprises assigning a higher priority to data flows for which said respective parameter indicates a larger time difference.

3. Method according to claim 1 or 2, wherein the step of prioritizing is implemented to drop at least a portion of the data flows in relation to the respective parameters of the data flows when network congestion occurs.

4. Method according to claim 3, wherein the step of prioritizing is implemented to drop a percentage of bits of the data flows proportional to the respective parameters of the data flows when network congestion occurs.

5. Method according to any one of the previous claims, wherein each one of the data flows comprises multiple data packages, wherein each package is assigned a separate parameter indicative for a time difference between the respective first moment of time relating to the data package and the respective second moment of time relating to the data package.

6. Network element comprising an earliest deadline first scheduling system, the network element comprising:

- an extractor for extracting a parameter from a data flow indicative for a time difference between a first moment of time of requesting the data flow and a second moment of time relating to a deadline of consumption of the data flow; and
- a prioritizer for prioritizing, when network congestion occurs, data flows at the scheduling system based on their respective parameters.

7. Network element according to claim 6, wherein the prioritizer is configured to assign a higher priority to data flows for which the respective parameter indicates a larger time difference.

8. Network element according to claim 6 or 7, wherein the prioritizer comprises a bit dropper that is adapted to drop at least a portion of the data flows in relation to the respective parameters

9. Network element according to claim 8, wherein the bit dropper is adapted to drop a percentage of bits of the data flows proportional to the respective parameters.

10. Data package suitable for being transmitted in an earliest deadline first (EDF) scheduling system, the data package comprising a parameter indicative for a time difference between a first moment of time of requesting the data package and a second moment of time relating to a deadline of consumption of the data package such that when network congestion occurs, the scheduling system is capable of using said parameter for package prioritization.

11. A digital data storage medium encoding a machine-executable program of instructions to perform the method of any one of the claims 1-5.

12. A computer program product comprising computer-executable instructions for performing, when the program is run on a computer, the method of any one of the claims 1-5.

**Amended claims in accordance with Rule 137(2) EPC.**

1. Method for prioritizing data flows (2) in a network comprising an earliest deadline first (EDF) scheduling system, comprising the steps of:

- requesting data flows at respective first moments of time;
- assigning to each one of the data flows a respective deadline relating to a respective second moment of time of consumption of the data flow;
- assigning a respective parameter to each one of the data flows indicative for a time difference between the respective first moment of time and the respective second moment of time;
- when network congestions occurs, prioritizing said data flows based on their respective parameters, **characterized in that** the step of prioritizing comprises assigning a higher priority to data flows for which said respective parameter indicates a larger time difference.

2. Method according to claim 1 or 2, wherein the step of prioritizing is implemented to drop at least a portion of the data flows in relation to the respective parameters of the data flows when network congestion occurs.

3. Method according to claim 3, wherein the step of prioritizing is implemented to drop a percentage of bits of the data flows proportional to the respective parameters of the data flows when network congestion occurs.

4.  Method according to any one of the previous claims, wherein each one of the data flows comprises multiple data packages, wherein each package is assigned a separate parameter indicative for a time difference between the respective first moment of time relating to the data package and the respective second moment of time relating to the data package.

5.  Network element (1) comprising an earliest deadline first scheduling system, the network element comprising:

    - an extractor for extracting a parameter from a data flow (2) indicative for a time difference between a first moment of time of requesting the data flow and a second moment of time relating to a deadline of consumption of the data flow; and
    - a prioritizer (13) for prioritizing, when network congestion occurs, data flows at the scheduling system based on their respective parameters, **characterized in that** the prioritizer is configured to assign a higher priority to data flows for which the respective parameter indicates a larger time difference.

6.  Network element according to claim 6 or 7, wherein the prioritizer comprises a bit dropper that is adapted to drop at least a portion of the data flows in relation to the respective parameters

7.  Network element according to claim 8, wherein the bit dropper is adapted to drop a percentage of bits of the data flows proportional to the respective parameters.

8.  Data package suitable for being transmitted in an earliest deadline first (EDF) scheduling system, the data package comprising a parameter indicative for a time difference between a first moment of time of requesting the data package and a second moment of time relating to a deadline of consumption of the data package such that when network congestion occurs, the scheduling system is capable of using said parameter for package prioritization to assign a higher priority to data flows for which the respective parameter indicates a larger time difference.

9.  A digital data storage medium encoding a machine-executable program of instructions to perform the method of any one of the claims 1-5.

10. A computer program product comprising computer-executable instructions for performing, when the program is run on a computer, the method of any one of the claims 1-5.

FIG. 1

## FIG. 2A

## FIG. 2B

Europäisches
Patentamt

European
Patent Office

Office européen
des brevets

# EUROPEAN SEARCH REPORT

Application Number

EP 15 30 5029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERGENHEM C ET AL:  "Fibre-ribbon ring network with inherent support for earliest deadline first message scheduling", PARALLEL AND DISTRIBUTED PROCESSING SYMPOSIUM., PROCEEDINGS INTERNATIO NAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15 April 2001 (2001-04-15), page 7pp, XP032343144, DOI: 10.1109/IPDPS.2002.1016235 ISBN: 978-0-7695-1573-1 | 1,3-6, 8-12 | INV. H04L12/875 |
| A | * page 4, left-hand column, line 22 - right-hand column, line 35 * ----- | 2,7 | |
| A | US 2001/047423 A1 (SHAO HUAI-RONG [CN] ET AL) 29 November 2001 (2001-11-29) * paragraph [0122] * ----- | 3,4,8,9 | |

| | | | TECHNICAL FIELDS SEARCHED (IPC) |
|---|---|---|---|
| | | | H04L |

The present search report has been drawn up for all claims

| Place of search | Date of completion of the search | Examiner |
|---|---|---|
| The Hague | 25 June 2015 | Perrier, Samuel |

EPO FORM 1503 03.82 (P04C01)

**EP 3 046 298 A1**

## ANNEX TO THE EUROPEAN SEARCH REPORT
## ON EUROPEAN PATENT APPLICATION NO.

EP 15 30 5029

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2015

| Patent document cited in search report | Publication date | Patent family member(s) | Publication date |
|---|---|---|---|
| US 2001047423 A1 | 29-11-2001 | NONE | |

EPO FORM P0459

For more details about this annex : see Official Journal of the European Patent Office, No. 12/82

13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. WILSON ; H. BALLANI ; T. KARAGIANNIS ; A. ROWSTRON ; BETTER NEVER.** Than Late: Meeting Deadlines in Datacenter Networks. *Proc. SIGCOMM,* 2011

- **B. VAMANAN ; J. HASAN ; T. N. VIJAYKUMAR.** Deadline-aware datacenter TCP (D2 TCP). *ACM SIGCOMM Computer Communication Review,* 2012, vol. 42 (4), 115-126